# EUROPEAN PATENT APPLICATION

(11) **EP 4 549 742 A1**
(43) Date of publication of application: **07.05.2025**
(21) Application number: 23216932.6
(22) Date of filing: 14.12.2023
(51) Int. Cl.: F04D 29/66, F01N 1/02

(54) **RESONANCE-TYPE SILENCER**

(30) Priority: 03.11.2023 KR 20230150721
(71) Applicant: LG Electronics Inc., Yeongdeungpo-gu Seoul 07336 (KR)
(72) Inventor: LEE, Joonkeun, Seoul 08592 (KR); KANG, Younnill, Seoul 08592 (KR); LEE, Horim, Seoul 08592 (KR); MOON, Jaeyoung, Seoul 08592 (KR); PARK, Sanghyuck, Seoul 08592 (KR)
(74) Representative: Vossius & Partner Patentanwälte Rechtsanwälte mbB

(57) **Abstract**

A resonance-type silencer includes a housing (10) having an air supply port formed on one side, an air exhaust port formed on the other side, and a chamber (13) formed thereinside, an air supply pipe (20) connected to the air supply port, an air exhaust pipe (30) connected to the air exhaust port, and a plurality of resonance pipes (110, 120) provided inside at least one of the air supply pipe (20) or the air exhaust pipe (30).

## Description

### BACKGROUND

The present disclosure relates to a resonance-type silencer for reducing noise of a turbo chiller.

Generally, a turbo chiller is a device for performing heat exchange between cold water and cooling water by using a refrigerant. The turbo chiller cools the cold water by performing heat exchange between the refrigerant circulating in the turbo chiller and the cold water circulating between the cold water consumer and the turbo chiller. Since the turbo chiller is used for large-scale air conditioning, a stable operation of the device is required.

Main components of a conventional turbo chiller system include a compressor, a condenser, an expansion mechanism, and an evaporator.

The compressor is a device for compressing gas such as air or refrigerant gas and is designed to compress a refrigerant and provide the compressed refrigerant to the condenser.

The condenser is configured to cool the refrigerant by performing heat exchange between cooling water and the high-temperature and high-pressure refrigerant discharged from the compressor and passing through the condenser.

The expansion mechanism is configured to transfer the refrigerant condensed by the condenser to the evaporator and change the high-pressure refrigerant to low-temperature and low-pressure refrigerant while passing through the expansion valve.

The evaporator is configured to cool the cold water supplied to a load while the refrigerant evaporates. The refrigerant evaporated by the evaporator is introduced into the compressor through a compressor connection pipe that connects a refrigerant outlet of the evaporator to a refrigerant inlet of the compressor.

The refrigerant outlet of the evaporator and the refrigerant inlet of the compressor are connected to each other through the compressor connection pipe. The refrigerant evaporated by the evaporator is introduced into the compressor through the compressor connection pipe and is compressed into a high-temperature high-pressure refrigerant.

The turbo chiller generates various noises, and a separate silencer is installed to reduce the noises.

Prior Document 1 (US 11,193,405) discloses a technology for reducing noise of a specific frequency band in a partition chamber.

In Prior Document 1, noise is blocked and resonated with multiple partitions, and there is a noise improvement effect, but when high pressure and flow rate exist, high back pressure is formed by the multiple partitions, which may cause a large loss in efficiency.

Main noise generated in the turbo chiller is noise generated by the primary and secondary blade passing frequency (BPF) caused by an impeller in the compressor. In particular, noise of a 1-kHz band corresponds to a frequency associated with the sensitive hearing characteristics of the human body.

In particular, in water-scarce countries such as the Middle East and parts of Europe, there is a tendency to prefer air-cooled electric heating rather than water-cooled electric heating. If BPF noise that is a major noise source is not reduced, the noise spreads to the outside of the building, resulting in civil complaints.

When installing an existing silencer so as to reduce BPF noise, a high back pressure is formed due to the principle of the silencer, resulting in pressure loss, which has the side effect of reducing the efficiency of the turbo chiller.

### SUMMARY

An object of the present disclosure is to provide a resonance-type silencer that can reduce blade passing frequency (BPF) that is a major noise source of a turbo chiller, while minimizing pressure loss due to flow rate, and can be installed in a spatially compact manner.

The resonance-type silencer according to the present disclosure causes noise corresponding to a specific frequency discharged through a compressor discharge portion to pass through a resonance pipe with a small diameter in an air supply pipe and then expands the noise in a chamber.

In addition, the air supply pipe having the same diameter as the discharge portion of the compressor is provided and the resonance pipe is installed inside the air supply pipe in a bundle to allow fluid to pass therethrough. By expanding the cross-sectional area in the middle of the silencer, the cross-sectional area ratio is maximized and the resonance phenomenon is caused at a specific frequency.

In addition, a resonance-type silencer according to the present disclosure includes a housing having an air supply port formed on one side, an air exhaust port formed on the other side, and a chamber formed thereinside, an air supply pipe connected to the air supply port, an air exhaust pipe connected to the air exhaust port, and a plurality of resonance pipes provided inside at least one of the air supply pipe or the air exhaust pipe.

In addition, a longitudinal direction of the resonance pipe and a longitudinal direction of the air supply pipe and the air exhaust pipe may be arranged parallel to each other.

In addition, an outer diameter of the resonance pipe may be formed to be less than an inner diameter of the air supply pipe and the air exhaust pipe.

In addition, an inner diameter of the housing may be formed to be greater than an inner diameters of the air supply pipe and the air exhaust pipe.

In addition, the air supply pipe and the air exhaust pipe may form a flange that extends along a circumference of an end portion connected to the housing and is coupled while shielding at least a portion of the air supply port and the air exhaust port.

In addition, an inner diameter of the housing may be kept constant in a longitudinal direction.

In addition, an inner diameter of the housing may change in a longitudinal direction.

In addition, the housing may include an expansion portion whose inner diameter increases in the longitudinal direction and a reduction portion whose inner diameter decreases in the longitudinal direction.

In addition, the resonance pipe may include a plurality of first resonance pipes disposed in the air supply pipe and a plurality of second resonance pipes disposed in the air exhaust pipe.

In addition, seven or more resonance pipes may be disposed in the air supply pipe or the air exhaust pipe.

In addition, the plurality of resonance pipes may have the same inner diameter or outer diameter.

In addition, the air supply pipe may be connected to an upper end of one side of the housing, and the air exhaust pipe may be connected to a lower end of the other side of the housing.

In addition, the air supply pipe and the air exhaust pipe may be formed at positions that do not overlap each other and are misaligned with respect to a longitudinal direction of the housing.

In addition, the resonance pipe may be open on both sides and may have at least one resonance hole formed on a side surface thereof.

In addition, a plurality of resonance holes may be formed in a longitudinal direction of the resonance pipe.

The resonance-type silencer of the present disclosure has an advantage of reducing pressure loss, minimizing a change in the external appearance of the silencer, having a compact structure, and improving a noise reduction effect.

In addition, when the structure of the present disclosure is applied, there is an advantage of reducing primary and secondary BPF noises, which are a major noise source generated in the turbo chiller.

In particular, there is an advantage in that the BPF noise of the air-cooled turbo chiller is blocked rather than being transmitted through the pipe connected to the discharge pipe to the external cooling coil.

In addition, back pressure generation and pressure loss within the silencer may be minimized, which has an advantage of maintaining the best efficiency of the chiller.

In addition, by providing the separate resonance pipe inside the air supply pipe or the air exhaust pipe and expanding the separate resonance pipe in the chamber within the housing, the cross-sectional area ratio may be maximized and the resulting noise reduction effect may also be maximized.

### BRIEF DESCRIPTION OF THE DRAWINGS

Fig. 1 is a perspective view of a resonance-type silencer according to an embodiment of the present disclosure.
Fig. 2 is a perspective view of a resonance-type silencer according to another embodiment of the present disclosure.
Fig. 3 is a longitudinal cross-sectional view of the resonance-type silencer illustrated in Fig. 1.
Fig. 4 is a side view of a resonance-type silencer according to still another embodiment of the present disclosure.
Fig. 5 is a perspective view of a resonance pipe according to an embodiment of the present disclosure.
Fig. 6 is a longitudinal cross-sectional view of an air supply pipe with a resonance pipe.
Fig. 7 is a rear perspective view of a resonance-type silencer according to an embodiment of the present disclosure.
Fig. 8 is a front view illustrating a state in which the resonance-type silencer according to the present disclosure is connected to a compressor discharge portion.
Fig. 9 is a graph illustrating a noise reduction effect obtained by the resonance-type silencer according to the present disclosure.

### DETAILED DESCRIPTION OF THE EMBODIMENTS

Hereinafter, specific embodiments of the present disclosure will be described in detail with reference to the drawings. However, the spirit of the present disclosure is not limited to the presented embodiments, and those of ordinary skill in the art can easily suggest other embodiments within the scope of the same spirit.

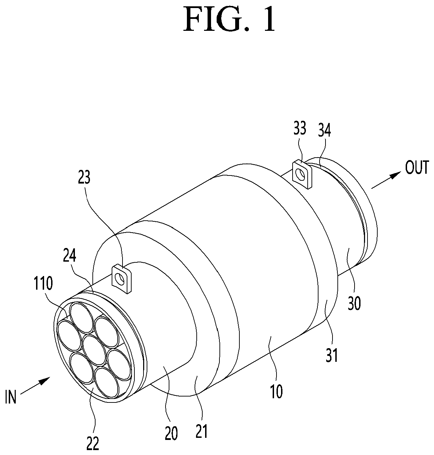

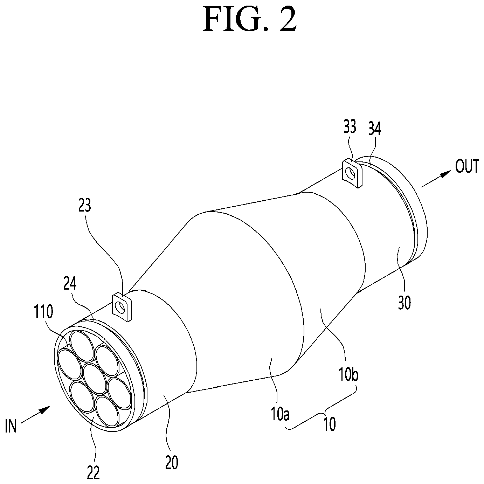

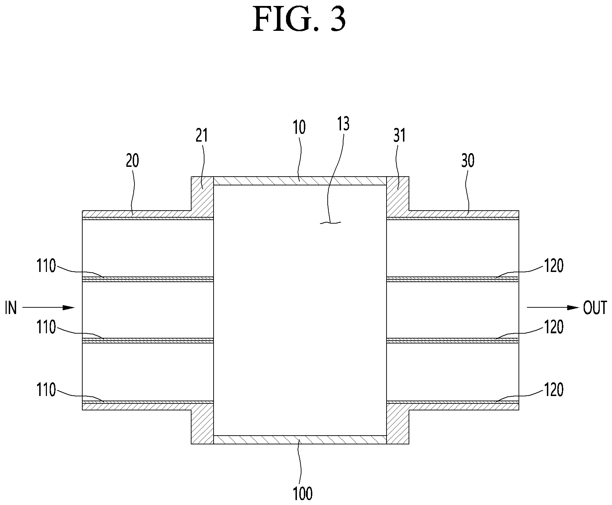

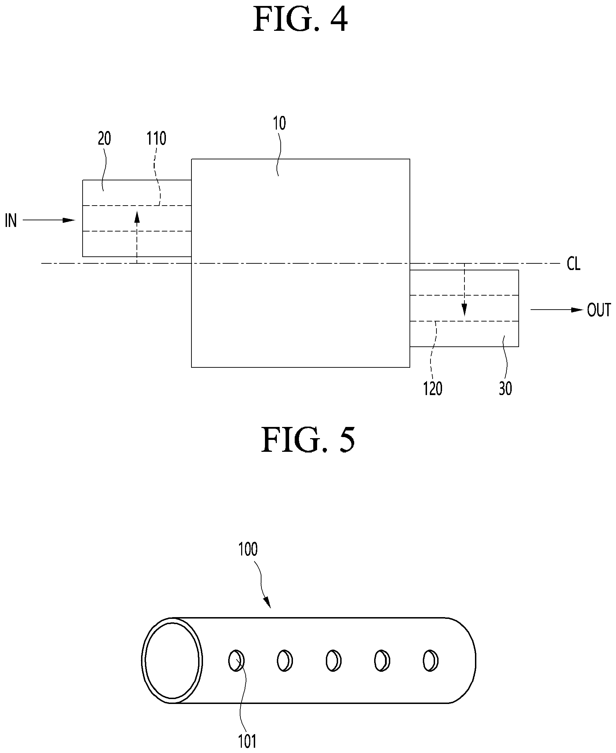

Fig. 1 is a perspective view of a resonance-type silencer according to an embodiment of the present disclosure. Fig. 2 is a perspective view of a resonance-type silencer according to another embodiment of the present disclosure. Fig. 3 is a longitudinal cross-sectional view of the resonance-type silencer illustrated in Fig. 1. Fig. 4 is a side view of a resonance-type silencer according to still another embodiment of the present disclosure.

Referring to Figs. 1 to 4, the resonance type silencer according to the present disclosure includes a housing 10 having an air supply port formed on one side, an air exhaust port formed on the other side, and a chamber 13 formed thereinside, an air supply pipe 20 connected to the air supply port, an air exhaust pipe 30 connected to the air exhaust port, and a plurality of resonance pipes 110 and 120 provided inside at least one of the air supply pipe 20 or the air exhaust pipe 30.

That is, the housing 10 is open on both sides, and the hollow thereinside may be used as the chamber 13.

Both open sides of the housing 10 are used as the air supply port and the air exhaust port, respectively. The air supply pipe 20 and the air exhaust pipe 30 are coupled to the air supply port and the air exhaust port, respectively.

The plurality of resonance pipes 110 and 120 may be provided inside the air supply pipe 20 and the air exhaust pipe 30.

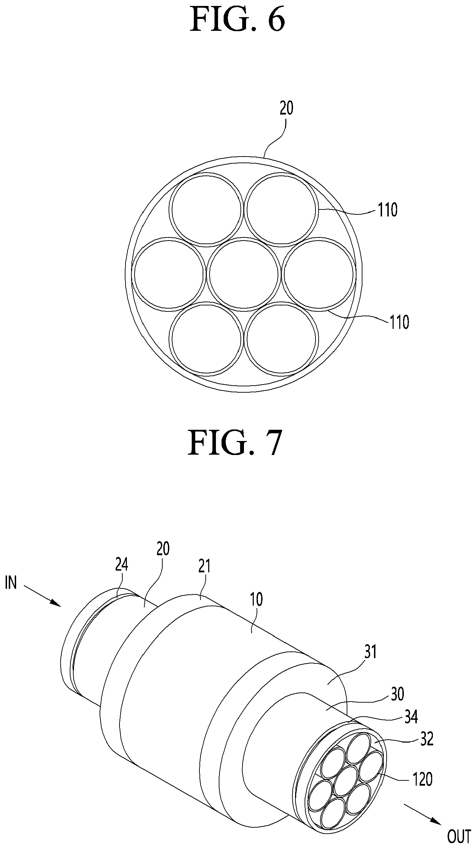

Fig. 6 is a longitudinal cross-sectional view of the air supply pipe with the resonance pipes.

Referring to Fig. 6, seven or more resonance pipes 110 and 120 may be disposed inside the air supply pipe 20 or the air exhaust pipe 30.

At this time, when viewed from a cross-section of the central portion of the air supply pipe 20 or the air exhaust pipe 30 cut in the vertical direction, at least three resonance pipes 110 and 120 may be disposed in the air supply pipe 20 or the air exhaust pipe 30.

For reference, in order to arrange at least three resonance pipes 110 and 120 in the air supply pipe 20 or the air exhaust pipe 30 as described above, the inner diameter of the air supply pipe 20 or the air exhaust pipe 30 may be three times or more the outer diameter of the resonance pipes 110 and 120.

The resonance pipes 110 and 120 serve to convert fluid noise generated from the compressor discharge portion into a plane wave and are provided to increase the cross-sectional area expansion ratio.

According to the present disclosure, at least a portion of the inner diameter of the housing 10 is formed to be greater than the inner diameter of the air supply pipe 20 or the air exhaust pipe 30.

Therefore, the cross-sectional area expansion ratio occurs due to the difference between the inner diameter of the air supply pipe 20 or the air exhaust pipe 30 and the inner diameter of the housing 10, and thus, the noise reduction effect is obtained. However, when the air supply pipe 20 or the air exhaust pipe 30 is provided with a plurality of resonance pipes 110 and 120 having an inner diameter less than that of the air supply pipe 20 or the air exhaust pipe 30 as described above, the cross-sectional air expansion ratio increases due to the difference between the inner diameters of the resonance pipes 110 and 120 and the inner diameter of the housing 10, and thus, the noise reduction effect may be increased.

Hereinafter, various noise reduction structures of the present disclosure will be described in more detail.

First, the air supply pipe 20 is connected to the discharge port of the compressor and receives the fluid discharged from the discharge portion of the compressor.

The air supply pipe 20 may be formed in the same shape and size as the discharge portion of the compressor. The air supply pipe 20 may have the same inner diameter as that of the discharge portion of the compressor.

The fluid introduced into the air supply pipe 20 flows into the chamber 13 within the housing 10 through the air supply port.

The housing 10 has a cylindrical shape with both sides open. Both open sides of the housing 10 are used as an air supply port and an air exhaust port, respectively.

The air supply pipe 20 and the air exhaust pipe 30 are connected to both open sides of the housing 10, respectively.

For example, the air supply pipe 20 and the air exhaust pipe 30 form flanges 21 and 31 at end portions connected to the housing 10, respectively.

The flanges 21 and 31 extend radially outward from the end portions of the air supply pipe 20 and the air exhaust pipe 30, respectively, and are formed along the circumference.

Additionally, the flanges 21 and 31 are connected to both sides of the housing 10, respectively. The flanges 21 and 31 may shield at least a portion of both open sides of the housing 10.

As an example, the air supply pipe 20 may be fixed to an opening on one side of the housing 10, i.e., the air supply port, and the air exhaust pipe 30 may be fixed to an opening on the other side of the housing 10, i.e., the air exhaust port.

The outer diameter of the flange 21 of the air supply pipe 20 may be formed to be the same as the outer diameter of the housing 10, and the outer diameter of the flange 31 of the air exhaust pipe 30 may be formed to be the same as the outer diameter of the housing 10.

The flange 21 of the air supply pipe 20 and the flange 31 of the air exhaust pipe 30 may be directly fixed to both sides of the housing 10 by welding or the like.

Additionally, the fluid introduced into the air supply pipe 20 passes through the chamber 13 of the housing 10 and is then discharged through the air exhaust pipe 30.

At this time, in order to reduce noise, some structures in the following embodiments may be applied.

The plurality of resonance pipes 110 and 120 may be provided inside the air supply pipe 20 or the air exhaust pipe 30.

The resonance pipes 110 and 120 may be provided only in the air supply pipe 20 or only in the air exhaust pipe 30.

The resonance pipes 110 and 120 may be provided in both the air supply pipe 20 and the air exhaust pipe 30.

The air supply pipe 20 may be provided with a plurality of first resonance pipes 110.

A plurality of first resonance pipes 110 are provided.

The plurality of first resonance pipes 110 may have the same shape and size. The plurality of first resonance pipes 110 may have the same length and the same inner diameter or outer diameter.

As an example, a bundle pipe may be manufactured by combining the plurality of first resonance pipes 110, and then, the bundle pipe may be inserted into the inside of the air supply pipe 20 and fixed thereto.

The outer diameter of the first resonance pipe 110 is less than the inner diameter of the air supply pipe 20.

The longitudinal direction of the first resonance pipe 110 and the longitudinal direction of the air supply pipe 20 are arranged parallel to each other. Likewise, the longitudinal direction of the housing 10 is also arranged parallel to the longitudinal direction of the first resonance pipe 110 and the air supply pipe 20.

The length of the first resonance pipe 110 may be formed to be the same as the length of the air supply pipe 20.

When the first resonance pipe 110 is provided in the air supply pipe 20 as described above, fluid noise generated at the discharge portion of the compressor (for example, the compressor of the turbo chiller) may be converted into a plane wave.

Additionally, the cross-sectional area expansion ratio may be increased. That is, when the plurality of first resonance pipes 110 are disposed in the air supply pipe 20, the cross-sectional area expansion ratio between the first resonance pipe 110 and the chamber 13 may be increased, thereby obtaining a noise reduction effect.

Additionally, the inner diameter of the chamber 13 may be formed to be greater than the inner diameter of the air supply port 11.

Accordingly, compared to the air supply pipe 20, the chamber 13 has an expanded shape.

Therefore, even when the first resonance pipe 110 is not disposed in the air supply pipe 20, the cross-sectional air expansion ratio between the air supply pipe 20 and the chamber 13 may be increased, thereby achieving a noise reduction effect.

In detail, when fluid flows from the air supply pipe 20 or the first resonance pipe 110 in the air supply pipe 20 to the chamber 13, the plane waves of phases expand and cancel each other out by phase interference, thereby obtaining a noise reduction effect.

In addition, the diameter and corresponding cross-sectional area of the chamber 13 are formed to be greater than the inner diameter and corresponding cross-sectional area of the air supply pipe 20 or the inner diameter and corresponding cross-sectional area of the air exhaust pipe 30.

Therefore, due to the structure in which the cross-sectional area of the chamber 13 expands compared to the air supply pipe 20 as described above, fluid noise passing through the first resonance pipe 110 of the air supply pipe 20 is canceled by phase interference as plane waves of the same phase expand in the chamber 13, and the noise may be reduced.

At this time, since the phase characteristics vary depending on the diameter and length of the air supply pipe 20, the first resonance pipe 110, and the chamber 13, it is necessary to optimize the shape by considering the refrigerant characteristics of the chiller and BPF.

Fig. 7 is a rear perspective view of a resonance-type silencer according to an embodiment of the present disclosure.

Referring to Fig. 7, the air exhaust pipe 30 may be provided with a plurality of second resonance pipes 120.

A plurality of second resonance pipes 120 are provided.

The plurality of second resonance pipes 120 may have the same shape and size. The plurality of second resonance pipes 120 may have the same length and the same inner diameter or outer diameter.

As a bundle pipe may be manufactured by combining the plurality of second resonance pipes 120, and then, the bundle pipe may be inserted into the inside of the air supply pipe 20 and fixed thereto.

The outer diameter of the second resonance pipe 120 is less than the inner diameter of the air exhaust pipe 30.

The longitudinal direction of the second resonance pipe 120 and the longitudinal direction of the air exhaust pipe 30 are arranged parallel to each other. Likewise, the longitudinal direction of the housing 10 is also arranged parallel to the longitudinal direction of the second resonance pipe 120 and the air exhaust pipe 30.

The length of the second resonance pipe 120 may be formed to be the same as the length of the air exhaust pipe 30.

When the second resonance pipe 120 is provided in the air exhaust pipe 30 as described above, the sound wave canceled by phase interference in the chamber 13 may be converted into plane waves again and discharged.

Additionally, as the cross-sectional area is reduced once again, a noise reduction effect may occur due to a change in the expansion ratio. That is, when the plurality of second resonance pipes 120 are disposed in the air exhaust pipe 30, the cross-sectional expansion ratio between the chamber 13 and the second resonance pipe 120 may be changed, thereby obtaining a noise reduction effect.

Additionally, the inner diameter of the chamber 13 may be formed to be greater than the inner diameter of the air exhaust port 12.

Accordingly, compared to the air exhaust pipe 30, the chamber 13 has an expanded shape.

Therefore, even when the second resonance pipe 120 is not disposed in the air exhaust pipe 30, a noise reduction effect may be obtained due to a change in the expansion ratio between the chamber 13 and the air exhaust pipe 30.

In detail, when fluid flows from the chamber 13 to the air exhaust pipe 30 or the second resonance pipe 120 in the air exhaust pipe 30, a change in the expansion ratio occurs due to a reduction in the cross-sectional area, thereby obtaining a noise reduction effect.

Additionally, when fluid flows from the chamber 13 to the air exhaust pipe 30 or the second resonance pipe 120 in the air exhaust pipe 30, the sound waves canceled by phase interference in the chamber 13 may be converted into plane waves again and transferred. At this time, when fluid flows from the chamber 13 to the air exhaust pipe 30 or the second resonance pipe 120 in the air exhaust pipe 30, the cross-sectional area is reduced once again and a noise reduction effect may occur due to a change in the expansion ratio.

At this time, since the phase characteristics vary depending on the diameter and length of the chamber 13, the air exhaust pipe 30, and the second resonance pipe 120, it is necessary to optimize the shape by considering the refrigerant characteristics of the chiller and BPF.

Additionally, the chamber 13 defined by the inner diameter of the chamber 13 or the inner space of the housing 10 may be kept constant in the longitudinal direction.

Additionally, the chamber 13 defined by the inner diameter of the chamber 13 or the inner space of the housing 10 may increase or decrease in the longitudinal direction.

Referring to Fig. 3, the housing 10 may be provided with an expansion portion 131 whose inner diameter increases in the longitudinal direction.

Additionally, the housing 10 may include a reduction portion 132 whose inner diameter is reduced at an end portion of the expansion portion 131.

One side of the expansion portion 131 has the same diameter as the air supply port.

The other side of the expansion portion 131 has a larger diameter than one side of the expansion portion 131.

The diameter of the expansion portion 131 may increase in a linear shape.

The diameter of the expansion portion 131 may increase in a curved shape.

One side of the reduction portion 132 has the same diameter as the other side of the expansion portion 131.

The other side of the reduction portion 132 has the same diameter as the air exhaust port.

One side of the reduction portion 132 has a larger diameter than the other side of the reduction portion 132.

The diameter of the reduction portion 132 may decrease in a linear shape.

The diameter of the reduction portion 132 may decrease in a curved shape.

As described above, when one side of the expansion portion 131 has the same diameter as the air supply port and the other side of the reduction portion 132 has the same diameter as the air exhaust port, the pressure loss may be reduced by reducing the vortex generated at the inlet of the chamber 13, even when the cross-sectional area ratio of the chamber 13 increases compared to the air supply pipe 20.

Additionally, even when the cross-sectional area ratio of the chamber 13 increases compared to the air exhaust pipe 30, the pressure loss may be reduced by reducing the vortex generated at the outlet of the chamber 13.

Fig. 5 is a perspective view of the resonance pipes according to an embodiment of the present disclosure.

Referring to Fig. 5, the resonance pipes 110 and 120 may have a hollow tube shape with both sides open and may function as multiple Helmholtz resonators by drilling resonance holes 101 in the side surface, thereby reducing BPF noise.

In detail, the resonance pipes 110 and 120 may be open on both sides and at least one resonance hole 101 may be formed in the side surface.

A plurality of resonance holes 101 may be formed in the longitudinal direction of the resonance pipes 110 and 120.

For reference, the reference numeral '100' in Fig. 5 may refer to the first resonance pipe 110 and the second resonance pipe 120.

As another example, referring to Fig. 4, the air supply pipe 20 may be located at the upper end of one side of the housing 10, and the air exhaust pipe 30 may be located at the bottom end of the other side of the housing 10.

Additionally, the air supply pipe 20 and the air exhaust pipe 30 may be formed at positions that do not overlap each other and are misaligned with respect to the longitudinal direction of the housing 10.

That is, the air supply pipe 20 and the air exhaust pipe 30 may be formed at positions that do not overlap each other and are misaligned with respect to the longitudinal central axis CL of the housing 10.

The air supply pipe 20 is connected to the upper end of one side of the housing 10 with respect to the longitudinal central axis CL of the housing 10.

Additionally, the air exhaust pipe 30 is connected to the lower end of the other side of the housing 10 with respect to the longitudinal central axis CL of the housing 10.

On the contrary, the air supply pipe 20 may be connected to the lower end of one side of the housing 10 with respect to the longitudinal central axis CL of the housing 10, and the air exhaust pipe 30 may be connected to the upper end of the other side of the housing 10 with respect to the longitudinal central axis CL of the housing 10.

In addition, the air supply pipe 20 and the air exhaust pipe 30 may be formed at positions that at least partially overlap each other and are misaligned with respect to the longitudinal central axis CL of the housing 10.

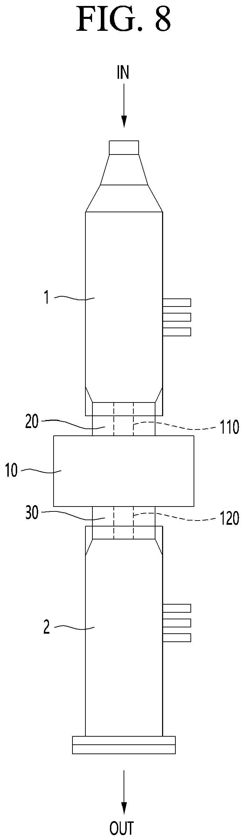

Fig. 8 is a front view illustrating a state in which the resonance-type silencer according to the present disclosure is connected to the compressor discharge portion.

Referring to Fig. 8, the resonance-type silencer of the present disclosure is connected to the middle of the compressor discharge portions 1 and 2. The compressor discharge portions 1 and 2 include a first discharge portion 1 and a second discharge portion 2.

The resonance-type silencer is disposed between the first discharge portion 1 and the second discharge portion 2, the first discharge portion 1 is connected to the air supply pipe 20, and the second discharge portion 2 is connected to the air exhaust pipe 30.

Accordingly, noise is reduced while the fluid discharged to the first discharge portion 1 passes through the air supply pipe 20, the housing 10, and the air exhaust pipe 30, and then, the fluid is discharged to the second discharge portion 2.

The resonance-type silencer illustrated in Fig. 1 was installed in the compressor discharge portion, and the noise reduction effect was tested in a band of 0 kHz to 4 kHz.

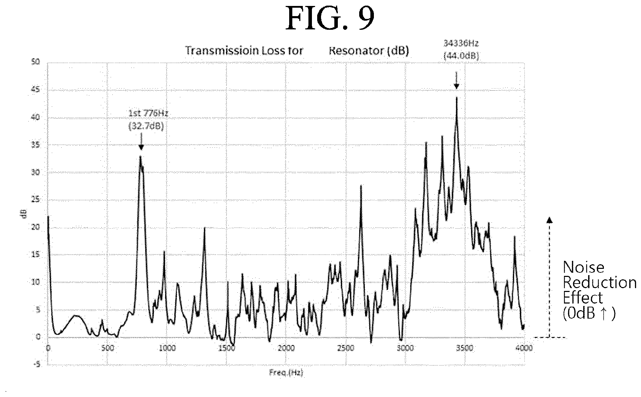

Fig. 9 is a graph illustrating the noise reduction effect obtained by the resonance-type silencer according to the present disclosure.

Referring to Fig. 9, when the resonance-type silencer according to the present disclosure was applied to the compressor discharge portion, it was confirmed that noise was reduced by up to 32.7 dB in a band of 500 Hz to 1.5 kHz, i.e., an audible frequency (A-weighting) band sensitive to the human body.

The present disclosure relates to the resonance-type silencer for reducing noise in the turbo chiller, in which noise corresponding to a specific frequency discharged through the compressor discharge pipe passes through the bundle pipe with a small diameter and then expands, thereby achieving noise reduction.

According to the present disclosure, the air supply pipe connected to the discharge pipe of the compressor is provided, and in order to minimize pressure loss inside the air supply pipe, the pipe with a small diameter is installed in a bundle to allow fluid to pass therethrough.

By expanding the cross-sectional area in the middle of the silencer, the cross-sectional area ratio is maximized and noise is reduced by generating a resonance phenomenon at a specific target frequency.

When applying the present disclosure, there is an advantage in that the pressure loss may be minimized and the change in the external shape of the silencer may be minimized while the noise reduction effect is maximized.

For example, in the present disclosure, the air supply pipe is connected to the inlet of the housing forming the chamber therein, and the air exhaust pipe is connected to the outlet of the housing. Fluid resistance is minimized by installing the pipe bundle inside the air supply pipe or the air exhaust pipe. By expanding the cross-sectional area of the chamber disposed between the air supply pipe and the air exhaust pipe, compared to the air supply pipe and the air exhaust pipe, a resonance phenomenon occurs due to the cross-sectional area ratio between the chamber and the pipe bundle, thereby implementing a structure in which noise is reduced.

In addition, when it is difficult to increase the cross-sectional area of the chamber compared to the air supply pipe and the air exhaust pipe due to installation problems, the cross-sectional area ratio is determined by the cross-sectional area ratio between the housing and the pipe bundle, thereby obtaining a noise reduction effect.

As another example, regardless of whether the pipe bundle is applied to the air supply pipe and the air exhaust pipe, noise may be reduced due to the structure in which the inner diameter of the housing is expanded compared to the air supply pipe and the air exhaust pipe.

In addition, in order to obtain a high noise reduction effect, when pressure loss occurs due to a high cross-sectional area ratio between the resonance pipe and the chamber, the cross-sectional area of the chamber may be gradually expanded to minimize pressure loss.

In addition, by providing an offset between the inlet and the outlet of the silencer and providing an offset to the air supply pipe and the air exhaust pipe connected to the inlet and the outlet of the silencer and the resonance pipe bundle accommodated therein, an additional noise reduction effect may be expected due to the offset.

In addition, the resonance hole is drilled in the longitudinal direction of the resonance pipe so that the resonance pipe itself may function as a resonator, and the corresponding resonance frequency may be designed by tuning according to the BPF.

## Claims

1. A resonance-type silencer comprising:
a housing (10) having an air supply port formed on one side, an air exhaust port formed on the other side, and a chamber (13) formed thereinside;
an air supply pipe (20) connected to the air supply port;
an air exhaust pipe (30) connected to the air exhaust port; and
a plurality of resonance pipes (110, 120) provided inside at least one of the air supply pipe (20) or the air exhaust pipe (30).

2. The resonance-type silencer of claim 1, wherein a longitudinal direction of the resonance pipe and a longitudinal direction of the air supply pipe and the air exhaust pipe are arranged parallel to each other.

3. The resonance-type silencer of claim 2, wherein an outer diameter of the resonance pipe is formed to be less than an inner diameter of the air supply pipe and the air exhaust pipe.

4. The resonance-type silencer of claim 1, wherein an inner diameter of the housing is formed to be greater than an inner diameters of the air supply pipe and the air exhaust pipe.

5. The resonance-type silencer of claim 4, wherein the air supply pipe and the air exhaust pipe form a flange that extends along a circumference of an end portion connected to the housing and is coupled while shielding at least a portion of the air supply port and the air exhaust port.

6. The resonance-type silencer of claim 1, wherein an inner diameter of the housing is kept constant in a longitudinal direction.

7. The resonance-type silencer of claim 1, wherein an inner diameter of the housing changes in a longitudinal direction.

8. The resonance-type silencer of claim 7, wherein the housing includes an expansion portion whose inner diameter increases in the longitudinal direction and a reduction portion whose inner diameter decreases.

9. The resonance-type silencer of claim 1, wherein the resonance pipe includes a plurality of first resonance pipes disposed in the air supply pipe and a plurality of second resonance pipes disposed in the air exhaust pipe.

10. The resonance-type silencer of claim 1, wherein seven or more resonance pipes are disposed in the air supply pipe or the air exhaust pipe.

11. The resonance-type silencer of claim 1, wherein the plurality of resonance pipes have the same inner diameter or outer diameter.

12. The resonance-type silencer of claim 1, wherein the air supply pipe is connected to an upper end of one side of the housing, and the air exhaust pipe is connected to a lower end of the other side of the housing.

13. The resonance-type silencer of claim 12, wherein the air supply pipe and the air exhaust pipe are formed at positions that do not overlap each other and are misaligned with respect to a longitudinal direction of the housing.

14. The resonance-type silencer of claim 1, wherein the resonance pipe is open on both sides and has at least one resonance hole formed on a side surface thereof.

15. The resonance-type silencer of claim 14, wherein a plurality of resonance holes are formed in a longitudinal direction of the resonance pipe.

## Amended claims

### Amended claims in accordance with Rule 137(2) EPC.

**1.** A resonance-type silencer comprising:
a housing (10) having an air supply port formed on one side, an air exhaust port formed on the other side, and a chamber (13) formed thereinside;
an air supply pipe (20) connected to the air supply port;
an air exhaust pipe (30) connected to the air exhaust port; and
a plurality of resonance pipes (110, 120) provided inside at least one of the air supply pipe (20) or the air exhaust pipe (30), and
wherein the plurality of resonance pipes (110, 120) includes a plurality of first resonance pipes (110) disposed in the air supply pipe (20) and a plurality of second resonance pipes (120) disposed in the air exhaust pipe (30).

**2.** The resonance-type silencer of claim 1, wherein a longitudinal direction of the resonance pipes (110, 120) and a longitudinal direction of the air supply pipe (20) and the air exhaust pipe (30) are arranged parallel to each other.

**3.** The resonance-type silencer of claim 2, wherein an outer diameter of the resonance pipes (110, 120) is formed to be less than an inner diameter of the air supply pipe (20) and the air exhaust pipe (30).

**4.** The resonance-type silencer of claim 1, wherein an inner diameter of the housing (10) is formed to be greater than an inner diameters of the air supply pipe (20) and the air exhaust pipe (30).

**5.** The resonance-type silencer of claim 4, wherein the air supply pipe (20) and the air exhaust pipe (30) form a flange that extends along a circumference of an end portion connected to the housing (10) and is coupled while shielding at least a portion of the air supply port and the air exhaust port.

**6.** The resonance-type silencer of claim 1, wherein an inner diameter of the housing (10) is kept constant in a longitudinal direction.

**7.** The resonance-type silencer of claim 1, wherein an inner diameter of the housing (10) changes in a longitudinal direction.

**8.** The resonance-type silencer of claim 7, wherein the housing (10) includes an expansion portion whose inner diameter increases in the longitudinal direction and a reduction portion whose inner diameter decreases.

**9.** The resonance-type silencer of claim 1, wherein seven or more resonance pipes (110, 120) are disposed in the air supply pipe (20) or the air exhaust pipe (30).

**10.** The resonance-type silencer of claim 1, wherein the plurality of resonance pipes (110, 120) have the same inner diameter or outer diameter.

**11.** The resonance-type silencer of claim 1, wherein the air supply pipe (20) is connected to an upper end of one side of the housing (10), and the air exhaust pipe (30) is connected to a lower end of the other side of the housing (10).

**12.** The resonance-type silencer of claim 11, wherein the air supply pipe (20) and the air exhaust pipe (30) are formed at positions that do not overlap each other and are misaligned with respect to a longitudinal direction of the housing (10).

**13.** The resonance-type silencer of claim 1, wherein the resonance pipes (110, 120) are open on both sides and has at least one resonance hole (101) formed on a side surface thereof.

**14.** The resonance-type silencer of claim 13, wherein a plurality of resonance holes (101) are formed in a longitudinal direction of the resonance pipes (110, 120).

**1.** A resonance-type silencer comprising:
a housing (10) having an air supply port formed on one side, an air exhaust port formed on the other side, and a chamber (13) formed thereinside;
an air supply pipe (20) connected to the air supply port;
an air exhaust pipe (30) connected to the air exhaust port; and
a plurality of resonance pipes (110, 120) provided inside at least one of the air supply pipe (20) or the air exhaust pipe (30), and
wherein the plurality of resonance pipes (110, 120) includes a plurality of first resonance pipes (110) disposed in the air supply pipe (20) and a plurality of second resonance pipes (120) disposed in the air exhaust pipe (30), and
wherein the air supply pipe (20) is connected to an upper end of one side of the housing (10), and the air exhaust pipe (30) is connected to a lower end of the other side of the housing (10), and
wherein the air supply pipe (20) and the air exhaust pipe (30) are formed at positions that do not overlap each other and are misaligned with respect to a longitudinal direction of the housing (10).

**2.** The resonance-type silencer of claim 1, wherein a longitudinal direction of the resonance pipes (110, 120) and a longitudinal direction of the air supply pipe (20) and the air exhaust pipe (30) are arranged parallel to each other.

**3.** The resonance-type silencer of claim 2, wherein an outer diameter of the resonance pipes (110, 120) is formed to be less than an inner diameter of the air supply pipe (20) and the air exhaust pipe (30).

**4.** The resonance-type silencer of claim 1, wherein an inner diameter of the housing (10) is formed to be greater than an inner diameters of the air supply pipe (20) and the air exhaust pipe (30).

**5.** The resonance-type silencer of claim 4, wherein the air supply pipe (20)and the air exhaust pipe (30) form a flange that extends along a circumference of an end portion connected to the housing (10) and is coupled while shielding at least a portion of the air supply port and the air exhaust port.

**6.** The resonance-type silencer of claim 1, wherein an inner diameter of the housing (10) is kept constant in a longitudinal direction.

**7.** The resonance-type silencer of claim 1, wherein an inner diameter of the housing (10) changes in a longitudinal direction.

**8.** The resonance-type silencer of claim 7, wherein the housing (10) includes an expansion portion whose inner diameter increases in the longitudinal direction and a reduction portion whose inner diameter decreases.

**9.** The resonance-type silencer of claim 1, wherein seven or more resonance pipes (110, 120) are disposed in the air supply pipe (20) or the air exhaust pipe (30).

**10.** The resonance-type silencer of claim 1, wherein the plurality of resonance pipes (110, 120) have the same inner diameter or outer diameter.

**11.** The resonance-type silencer of claim 1, wherein the resonance pipes (110, 120) are open on both sides and has at least one resonance hole (101) formed on a side surface thereof.

**12.** The resonance-type silencer of claim 11, wherein a plurality of resonance holes (101) are formed in a longitudinal direction of the resonance pipes (110, 120).
